Europäisches Patentamt

European Patent Office

Office européen des brevets

(19)

(11) Numéro de publication: **0 122 207**
**B1**

(12) **FASCICULE DE BREVET EUROPÉEN**

(45) Date de publication du fascicule du brevet:
18.03.87

(51) Int. Cl.⁴: **B 29 C 45/73**, B 29 C 45/00

(21) Numéro de dépôt: 84420054.3

(22) Date de dépôt: 22.03.84

(54) Procédé d'injection de pièces moulées en matière plastique.

(30) Priorité: 06.04.83 FR 8305984

(43) Date de publication de la demande:
17.10.84 Bulletin 84/42

(45) Mention de la délivrance du brevet:
18.03.87 Bulletin 87/12

(84) Etats contractants désignés:
AT BE CH DE GB IT LI SE

(56) Documents cité:
DE-A-2 423 413
DE-C-1 170 589
FR-A-2 070 776
US-A-4 172 872

DER PLASTVERARBEITER, vol. 26, no. 9, septembre
1975, pages 491-498, Speyer/Rhein, DE; P. FRIEL:
Beitrag zum Temperieren von
Spritzgiesswerkzeugen"
JAPAN PLASTICS AGE, vol. 12, no. 7, juillet 1974,
pages 39-45, Tokyo, JP; Y. FUKE: "Progresses of
automatic mold. Part II Approaches to automation
and high cycle molding seen from molds"

(73) Titulaire: Société dite: LANDRY PLASTIQUES
SUD (société anonyme), 85 rue Castellion,
F-01100 Oyonnax (FR)

(72) Inventeur: Landry, Philippe, 85 rue Castellion,
F-01100 Oyonnax (FR)

(74) Mandataire: Laurent, Michel, 20 rue Louis Chirpaz
Boite Postale 32, F-69130 Lyon- Ecully (FR)

## Description

L'invention concerne un dispositif perfectionné pour l'injection de pièces moulées en matière plastique.

Le moulage par injection de pièces en matière plastique est bien connu. De la sorte, il n'est pas utile de décrire ici en détail cette technique.

L'invention concerne plus particulièrement un dispositif pour la fabrication d'objets moulés ou injectés ouverts et dont la ceinture, qui doit être aussi rectiligne et plane que possible, présente une grande longueur par rapport à la largeur.

De tels objets ouverts sont bien connus pour différentes applications, notamment pour la confection des boites à eau des radiateurs automobiles, c'est-à-dire des boites d'entrée et de sortie qui viennent s'emmancher et s'ajuster sur les faisceaux tubulaires de refroidissement où circule l'eau.

Avec certaines matières plastiques, telles que par exemple les polyamides, notamment celles qui sont chargées en fibres de verre, les faces de la ceinture se voilent dans le plan vertical et horizontal. Plus exactement, en pratique, la face plane de la ceinture, du moins dans le sens de la longueur se bombe dans le plan horizontal et se creuse dans le plan vertical, de sorte que les faces rentrent vers l'intérieur et se déforment en planéité. Ces déformations se traduisent par un défaut de rectitude et de planéité.

Pour pallier cet inconvénient, on a suggéré d'utiliser d'autres matières plastiques, telles que par exemple celles à base de PPO. Malheureusement, ces matières coûtent relativement cher.

Pour compenser ces déformations, on a suggéré à la sortie du démoulage de placer la pièce dans un conformateur dans lequel la pièce, encore chaude, est mise en contrainte sur un poinçon en forme où on la laisse refroidir. On obtient de la sorte une planéité et une rectitude suffisantes dans les deux plans. Malheureusement, dans le temps, les contraintes initiales répparaissent, ce qui nécessite alors d'utiliser ces pièces assez rapidement et rend tout stockage difficile, sinon impossible. Comme il s'agit en outre d'une opération supplémentaire, cela se traduit par une augmentation appréciable du coût.

Dans le brevet US-A-4 172 872, on a suggéré de refroidir par une pluralité de puits l'empreinte de moulage qui est formée par une matrice et un poinçon. Cette technique de refroidissement permet de mieux contrôler les différentes contraintes et ainsi la forme définitive de la pièce. A ce jour, pour ce faire, les différents puits sont reliés entre eux à une source unique de refroidissement, voire de réchauffement (voir aussi "Der Plastverarbeiter vol 26 n° 9 Sept. 1975 paqes 491 à 498).

On a suggéré de réguler individuellement chaque puits élémentaire. Mais celà conduit à des installations complexes, encombrantes et coûteuses, tant sur le plan de l'outillage que celui de la maintenance.

L'invention pallie ces inconvénients. Elle vise un dispositif du type en question qui soit économique, facile à mettre en oeuvre et permette d'obtenir et de réaliser des pièces ouvertes dans lesquelles la ceinture présente une rectitude et une planéité satisfaisantes.

Ce dispositif pour l'injection de récipients moulés en matière plastique, dont la longueur (AD) est nettement supérieure à la largeur et qui est ouvert sur une des grandes faces, l'ouverture étant entourée d'une ceinture contenue dans un plan parallèle au fond dudit récipient, du type dans lequel l'empreinte de moulage est constituée par une matrice et un poinçon comportant une pluralité de puits, régulés thermiquement, se caractérise:

- en ce que les puits individuels régulés sont répartis en série sur la longueur en au moins trois groupes élémentaires, les qroupes placés à chacune des extrémités étant refroidis, alors que le ou les groupes placés au centre sont réchauffés;

- en ce que les faces latérales de l'empreinte de la ceinture (matrice-poinçon) de moulaqe s'écartent progressivement et légèrement à partir de chaque extrémité et ce sur une partie de la lonqueur de l'empreinte, les parties écartées proqressivement étant ensuite reliées entre elles par une portion centrale médiane rectiligne;

- et en ce que l'embase de l'empreinte de la ceinture de moulage côté ouverture est légèrement réhaussée à chaque extrémité, puis diminue progressivement pour se raccorder avec une portion centrale médiane rectiligne mise à la cote nominale souhaitée.

Avantageusement, en pratique:

- l'organe de régulation thermique du circuit relié à chaque groupe de puits comprend:

. une source de fluide thermique,

. une pompe de circulation du fluide dans le circuit de chaque qroupe de puits concerné,

. un régulateur de débit placé sur le circuit retour de puits à la source de fluide,

. un manomètre placé sur le circuit départ;

- la flèche formée par la portion écartée de la face latérale de l'empreinte est comprise entre 0,6 et 1,2 millimètre;

- les faces latérales de l'empreinte disposées dans le sens de la longueur sont écartées sur une portion comprise, de chaque côté, entre le quart et le tiers de la longueur de l'empreinte;

- l'embase de l'empreinte de moulage côté ouverture est légèrement réhaussée à chaque extrémité, puis diminue progressivement pour se raccorder avec la portion centrale médiane rectiligne;

- l'embase de l'empreinte de moulage côté ouverture est réhaussée de 0,4 à 0,7 mm à chaque extrémité de l'empreinte, puis diminue progressivement sur une longueur comprise entre le quart et le tiers de la longueur de l'embase, pour se raccorder à une portion centrale rectiligne médiane;

- le plan de joint; poinçon-matrice est situé au niveau du milieu de la partie destinée à former le rebord de la ceinture de l'objet moulé.

Comme déjà dit, la régulation thermique du poinçon voire de la matrice pendant l'injection était connue, notamment pour obtenir des meilleures conditions d'injection. Or, comme on le sait, plus on moule rapidement, plus le poinçon s'échauffe, ce qui se traduit par des irrégularités sur les pièces moulées, car, plus la matière est chaude, plus les contraintes sont augmentées. L'invention consiste à ne plus réguler individuellement chaque puits, mais au contraire à réguler thermiquement des groupes de puits individuels en refroidissant aux deux extrémités, c'est-à-dire aux endroits où normalement il y a le plus de matière, et simultanément en réchauffant, au moins légèrement, au centre.

Comme déjà dit, il est indispensable que les puits soient au moins placés sur le poinçon, éventuellement également sur la matrice.

Par ailleurs, on sait que lorsque l'on injecte la matière plastique chaude dans un moule de manière à former une pièce ouverte dans laquelle la ceinture comporte une grande longueur par rapport à la largeur, après refroidissement, les faces ouvertes parallèles de la pièce moulée n'ont plus tendance à être parfaitement parallèles, mais au contraire à être incurvées vers le centre. Pour compenser ce défaut, selon l'invention, les faces latérales de l'empreinte du moule ne sont plus disposées en parallèle comme on le faisait jusqu'à ce jour, mais, au contraire, à partir de chaque extrémité de l'empreinte, on écarte progressivement les faces latérales de cette empreinte, par exemple sur le quart ou le tiers de la longueur puis on relie les deux portions ainsi écartées, avantageusement de 0,6 à 1' millimètre par une portion centrale médiane rectiligne. On a déterminé qu'il n'était pas utile de dépasser un écartement, c'est-à-dire une flèche de 1,2 mm, sinon on obtenait des effets de voute irréversibles et préjudiciables.

De même, on a observé que si l'empreinte initiale de ces pièces ouvertes dans lesquelles la longueur est notablement plus grande que la largeur était plane, après démoulage on obtenait un bombé pouvant présenter une flèche appréciable. Selon l'invention, pour compenser ce défaut préjudiciable la partie centrale de l'outillage de l'empreinte formant l'embase est placée à la côte voulue, mais, en revanche, chacune des deux extrémités de l'empreinte de l'embase est écartée den 4 à 0,7 millimètre à compter de la côte centrale et ce, sur le quart ou le tiers de la longueur de l'embase.

De même, avantageusement, comme déjà dit, le plan de joint: poinçon-matrice doit être situé au niveau du milieu de la partie destinée à former le rebord de la ceimture de l'objet moulé.

La manière dont l'invention peut être réalisée et les avantages qui en découlent ressortiront mieux des exemples de réalisation qui suivent donnés à titre indicatif et non limitatif à l'appui des figures annexées.

La figure 1 représente un schéma général d'une machine d'injection moulage connue.

La figure 2 est une représentation schématique d'une empreinte de moulage conforme à l'invention.

La figure 3 est une représentation d'un puits individuel de régulation.

La figure 4 est une représentation du système d'alimentation d'un ensemble de plusieurs puits groupés ensemble.

La figure 5 représente une disposition sommaire du système de régulation thermique.

Les figures 6 et 7 représentent schématiquement les déformations appliquées au moule pour obtenir une pièce ouverte rectiligne et plane (poinçon et matrice).

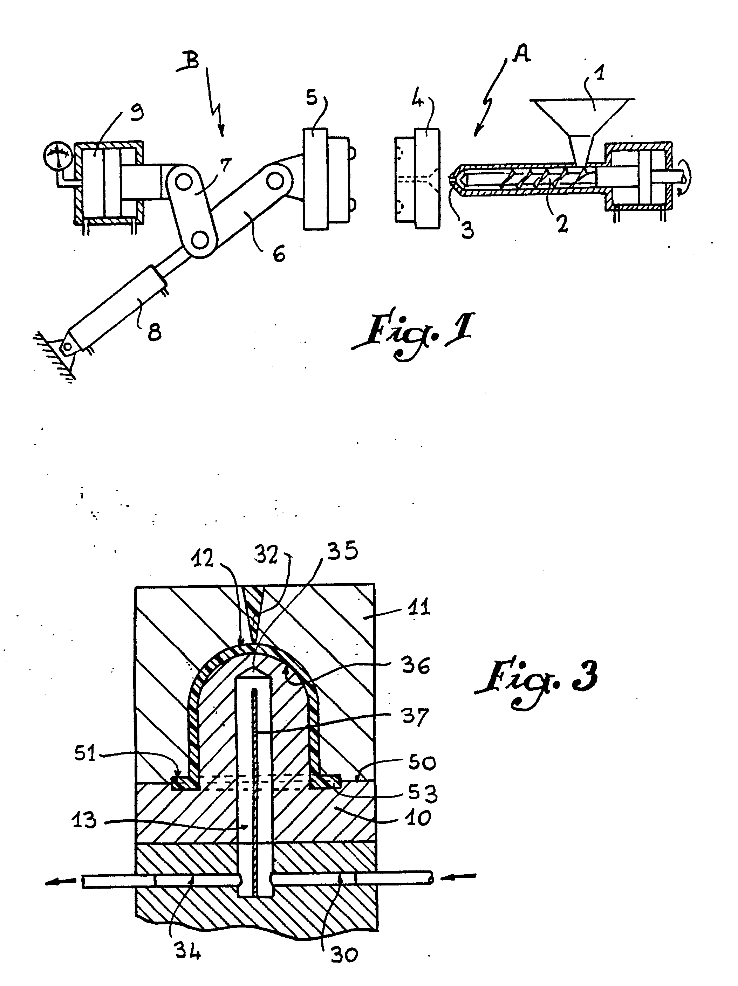

Comme on le sait (voir figure 1), une machine d'injection classique se compose essentiellement de deux parties, l'une A d'injection, l'autre B de fermeture, qui comprennent dans l'ordre:
- une trémie de chargement (1),
- une vis rotative chauffée (2),
- une tête d'injection (3) qui débouche dans l'empreinte de moulage, elle-même formée de deux plaques (4) et (5) qui portent le moule (empreinte),
- un ensemble de bras (6, 7) articulés par des vérins (8) pour assurer la fermeture,
- et enfin une réserve hydraulique (9).

Le fonctionnement d'une telle machine est bien connu, de sorte qu'il n'est pas utile de le décrire ici en détail.

L'empreinte de moulage proprement dite est formée essentiellement:
- par un poinçon (10) porté par la plaque fixe (4),
- et par une matrice (11), portée alors par la plaque mobile (5) (voir figure 3).

Le poinçon (10) et la matrice (11) ménagent entre eux un intervalle (12) destiné à recevoir la matière plastique chaude injectée depuis la tête (3), de manière à constituer l'objet moulé après refroidissement.

Le poinçon (10) comporte une pluralité de puits individuels (13) de régulation, par exemple au nombre de neuf, disposés à vingt millimètres les uns des autres et regroupés en série par groupes de trois, à savoir (figure 3):
- deux groupes, respectivement (14) et (15), placés à chacune des extrémites;
- un groupe contral (16) placé au milieu.

Les deux groupes (14) et (15) placés à chaque extrémité sont reliés à un groupe frigorifique (20) ou à l'eau de ville du réseau (33), alors qu'en revanche le groupe central (16) est relie a un organe de chauffage (21). Les groupes frigorifiques (20) et de chauffage (21) sont montés sur des roulettes (22), de manière à pouvoir être amenés aussi près que possible de la machine d'injection.

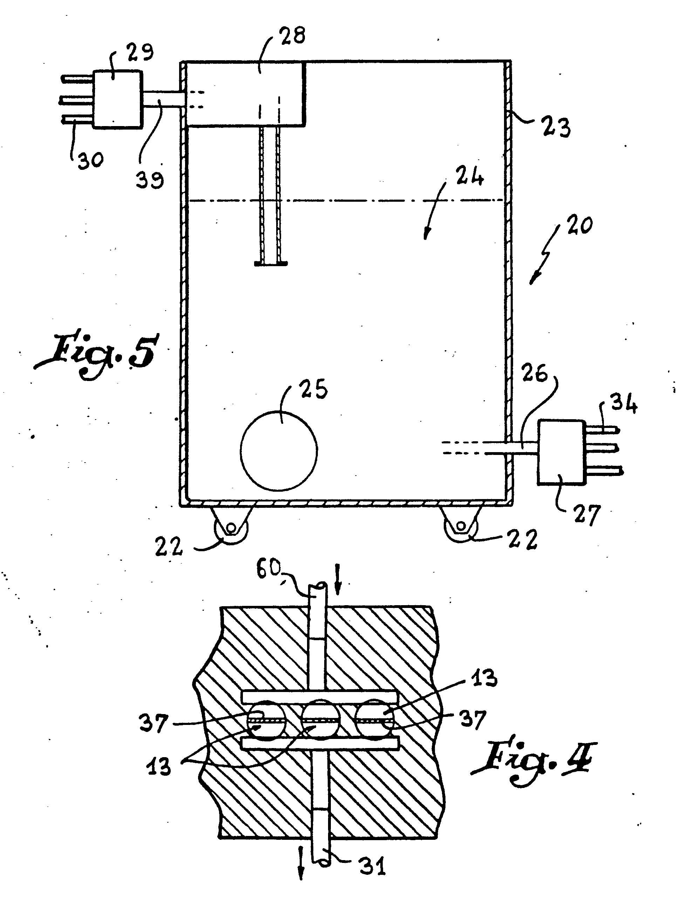

Le groupe frigorifique (20) (voir figure 5) se compose essentiellement d'une cuve (23) contenant une réserve d'eau réfrigérée (24) additionnée d'antigel. Une pompe (25) assure la circulation de cette eau réfrigérée (24) dans le circuit (15). Une arrivée (26 ou 26') relie après passage dans un régulateur (27) chacun des trois circuite individuels de retour (34 ou 34') aux departs des puite (13) de chaque groupe (14 ou 15). Une pompe (28), placée en haut de la cuve (23), assure le départ (38, 38') vers le circuit individuel des puits (13) et ce, après que l'eau réfrigérée, envoyée dans le circuit, soit passée dane un manomètre collectif (29) pour alimenter chacun des circuits individuels (30) reliant l'entrée des groupes de puits (14, 15). De la sorte, chaque circuit de puits individuel (13) est toujours en circulation. De manière connue, le régulateur (27), les manomètres (29) et les pompes (25, 28) sont connectés et asservis entre eux, de manière à bien assurer cette circulation et cette régulation. Le réchauffeur (21) relié au groupe central (16) présente une constitution analogue à celle des groupes d'extrémité (20 ou 33), à l'exception toutefois que la source frigorifique y est remplacée par une source chauffante, telle qu'une résistance chauffante (46) ou mieux une huile chauffée notamment avec des circuits départ (47) et retour (48) appropriés.

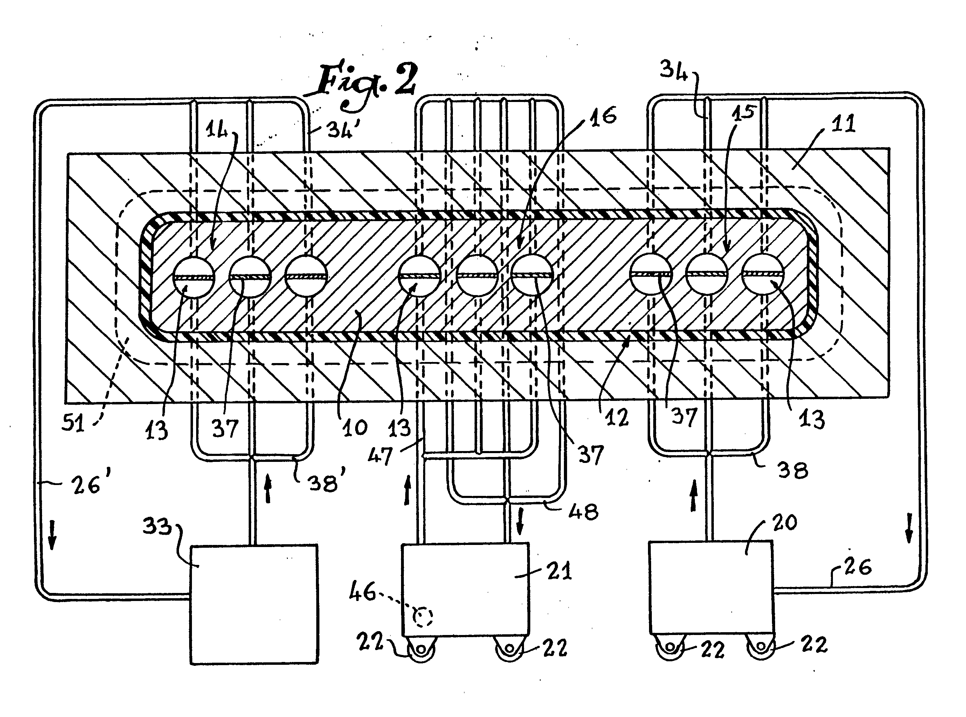

En pratique, au lieu d'avoir trois circuits individuels pour chacun des groupes (14, 15 ou 16) de puits on peut avoir qu'une seule canalisation (31 ou 60), celle-ci (voir figure 4) étant reliée à chacun des puits individuels (13) regroupés ensemble.

Chaque puits individuel (13) (voir figure 3) est formé par un puits proprement dit (13) taillé dans le poinçon et dont l'extrémité est située aussi proche que possible de la face (36) à refroidir, grâce à une pointe de forme conique (35). Dans ce puits tubulare, de manière connue, on place une cloison, notamment en tôle (37) qui sépare ainsi le circuit d'arrivée (30) de l'eau froide, du circuit départ (34) de l'eau réchauffée par le contact de la paroi (37) avec la matière plastique chaude injectée dans l'interstice (12).

Dans l'exemple de réalisation qui suit, on cherche à réaliser une boite de sortie pour radiateur automobile en polyamide 6.6, colorée en noir, chargée à 30 % en poids de fibres de verre. Cette pièce d'environ 180 grammes présente les caractéristiques dimensionnelles suivantes:
- longueur L de la ceinture ouverte: 350 millimètres (mm)
- largeur de la ceinture: 46 mm
- hauteur de la pièce: 45 mm
- épaisseur de cette pièce: 2 à 2,5 mm
- hauteur du rebord de la ceinture : 4 mm
- largeur du rebord de la ceinture: 7 mm.

Si l'on moule une telle pièce par les techniques usuelles, c'est-à-dire une technique dans laquelle l'empreinte (matrice + poinçon) présente une forme correspondante à celle de la pièce à réaliser, après démoulage et refroidissement, on obtient des pièces dans lesquelles la ceinture présente un défaut manifeste de planéité et de rectitude. Ces écarts rendent l'emploi de ces pièces impossible pour la confection des radiateurs automobiles, sauf comme indiqué dans le préambule, à les passer au conformateur et à les utiliser de suite sans stockage.

Pour pallier cet inconvénient, selon l'invention (voir figures 3 à 7), l'empreinte est modifée comme suit.

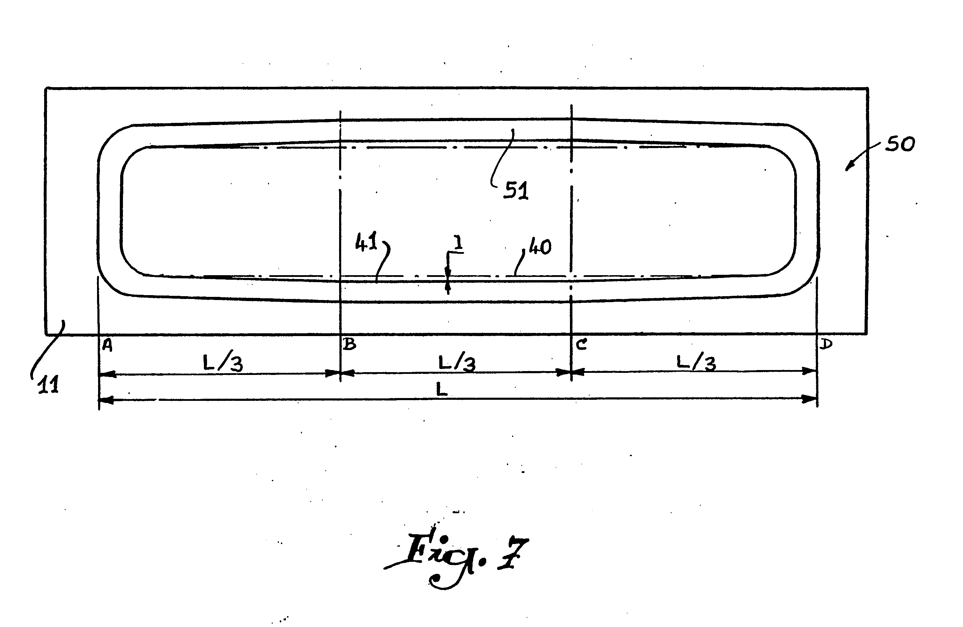

Tout d'abord (voir figure 7), on écarte progressivement et légèrement les flancs latéraux de la ceinture (53) vers l'extérieur. A partir de chaque extrémité A ou D de ces ceintures (53), on écarte le flanc sur une longueur AB ou CD égale sensiblement au tiers de la longueur $\underline{L}$ de l'empreinte. On écarte le flanc sur les deux portions extrêmes AB et CD d'une hauteur d'environ 0,8 mm. Les deux portions ainsi écartées AB et CD sont reliées ensuite entre elles par une portion centrale médiane BC rectiligne. En d'autres termes, la flèche de cet écartement $\underline{l}$ est voisine de 0,8 mm. La référence (40) montre ce qu'aurait été le flanc latéral de l'empreinte: poinçon (10) et matrice (11) dans les techniques usuelles avec forme de l'empreinte correspondant à celle de la pièce moulée.

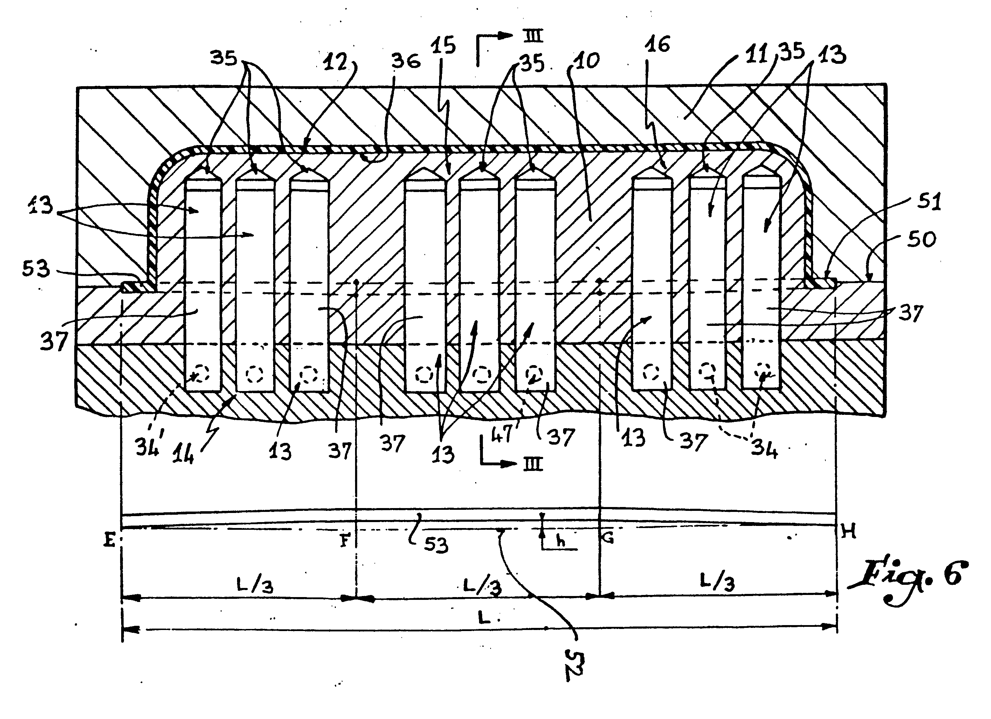

Parallèlement, l'embase (45) de l'empreinte (voir figure 6) est réhaussée à partir de chacune des deux extrémités E et H sur le tiers également de cette longueur L et ce, sur une hauteur $\underline{h}$ de 0,6 mm environ. Ensuite, chacune des deux portions inclinées EF et GH est raccordée à une partie médiane rectiligne FG disposée à la côte initiale souhaitée. La référence (52) désigne, à l'instar de (40), ce qu'aurait été cette embase dans les techniques usuelles dans lesquelles la forme de l'empreinte correspond à celle de la pièce moulée.

Avantageusement, la dépouille va progressivement sur les flancs de 0° en A et D jusqu'à 3 degrés en B et C, et ce pour se maintenir aux environs de 3° sur la portion centrale médiane rectiligne BC. De la sorte, on facilite le démoulage de la pièce injectée.

Comme déjà dit, le plan de joint (50) du poinçon (10) et de la matrice (11) n'est pas disposé, comme on le fait actuellement, dans le plan de la ceinture (53), mais environ au mileu du rebord (51) destiné à former cette ceinture (53) (voir figures 3 et 6 ). De la sorte, après démoulage, on obtient une ceinture suffisamment rectiligne et plane, du moins pour les applications usuelles.

La répartition des puits en série et en groupes avec refroidissement des groupes extrêmes et réchauffement des groupes centraux prise en combinaison avec la forme particulière de l'empreinte, c'est-à-dire avec écartement des flancs et réhausse de l'embase aux extrémités, permet d'obtenir une déformation positive de la pièce moulée dans la zone centrale, ce que l'on ne savait obtenir jusqu'alors.

Cette nouvelle association est particulièrement avantageuse dans le cas où l'injection dans la tête (3) se fait au centre (32) de l'empreinte (représenté en 32 seulement à la figure 3 pour ne pas surcharger les dessins).

Grâce à un tel moule monoempreinte, on peut injecter, sans difficulté particulière, des pièces du genre en question à une cadence d'environ 90 pièces à l'heure. Ces pièces, même après un stockage de un mois dans des conditions usuelles et normales, ne présentent pas de variation sensible des côtes de la ceinture (53).

Le procédé selon l'invention présente de nombreux avantages par rapport à ceux qui étaient connus à ce jour. On peut citer:
- la suppression de la phase de conformation ce qui réduit sensiblement le coût de fabrication de ces pièces;

4

- l'excellente stabilité dimensionnelle de ces pièces dans le temps, ce qui autorise un stockage;
- la possibilité d'obtenir des cadences de fabrication élevées, notamment par suite de la suppression des manipulations intermédiaires.

De la sorte, ce procédé peut convenir pour la réalisation de toutes pièces moulées ouvertes, dans lesquelles la longueur est nettement supérieure à la largeur et dans lesquelles on recherche une rectitude et une planéité de la ceinture aussi bonnes que possible, notamment avec des matières plastiques qui présentent des contraintes internes élevées lors du refroidissement, telles que par exemple les polyamides, les polypropylènes, les polyéthylènes, spécialement si ces matières sont chargées de fibres de verre ou d'autres charges fibreuses usuelles.

A titre d'application, on peut citer:
- les boites d'entrée ou de sortie des radiateurs automobiles,
- les carters de machines ou de moteurs.


## Revendications

1/ Dispositif pour l'injection de récipients moulés en matière plastique, dont la longueur (AD) est nettement supérieure à la largeur et qui est ouvert sur une des grandes faces, l'ouverture étant entourée d'une ceinture contenue dans un plan parallèle au fond dudit récipient, ce dispositif étant du type dans lequel l'empreinte de moulage est constituée par une matrice (11) et un poinçon (10) comportant une pluralité de puits (13), régulés thermiquement, caractérisé:
- en ce que les puits individuels (13) régulés sont repartis en série sur la longueur (AD) en au moins trois groupes (14, 15, 16) élémentaires, les groupes (14, 15) placés à chacune des extrémités étant refroidis, alors que le ou les groupes (16) placés au centre sont réchauffés;
- en ce que les faces laterales (41) de l'empreinte de la ceinture (53) (matrice 11 - poinçon 10) de moulage s'écartent progressivement (AB et CD) et légèrement à partir de chaque extrémité (A, D) et ce sur une partie de la longueur L de l'empreinte, les parties écartées progressivement (AB et CD) étant ensuite reliées entre elles par une portion (BC) centrale médiane rectiligne;
- et en ce que l'embase (45) de l'empreinte de la ceinture (53) de moulage côté ouverture est légèrement réhaussée à chaque extrémité (E, H), puis diminue progressivement (EF, GH) pour se raccorder avec une portion centrale médiane rectiligne (FG) mise à la cote nominale souhaitée.

2/ Dispositif selon la revendication 1, caractérisé en ce que l'organe de régulation thermique de chaque groupe de puits individuels (13) comprend:
- une source (20, 21, 33) de fluide thermique (24);
- une pompe (28) de circulation de fluide (24) dans
le circuit (26, 30) de chaque groupe de puits (13) concerné;
- un régulateur (27) du débit placé sur le circuit retour (26) du puits (13) à la source de fluide (21);
- un manomètre (29) placé sur le circuit départ (30).

3/ Dispositif selon la revendication 1, caractérisé:
- en ce que la flèche (I) formée par la portion centrale (BC) écartée (40, 41) de la face latérale de l'empreinte est comprise entre 0,6 et 1,2 mm;
- et en ce que les faces latérales (41) de l'empreinte disposées dans le sens de la longueur (AB, CD) sont écartées sur une portion comprise, de chaque côté, entre le quart et le tiers de la longueur L de l'empreinte.

4/ Dispositif selon la revendication 1, caractérisé en ce que l'embase (45) de l'empreinte de moulage côté ouverture est réhaussée de 0,4 à 0,7 mm à chaque extrémité (E, H), puis diminue progressivement (EF, GH) sur environ le quart ou le tiers de la longueur L de l'embase pour se raccorder enfin à une portion centrale rectiligne médiane (F, G).

5/ Dispositif selon l'une des revendications 1 à 4, caractérisé en ce que le plan de joint (50) de l'ensemble: poinçon (10)-matrice (11) est situé au niveau du milieu de la hauteur de la partie destinée à former le rebord (51) de la ceinture (53) de l'objet moulé.

6/ Dispositif selon la revendication 1, caractérisé en ce que les puits individuels (13) sont répartis en trois groupes (14, 15, 16) sensiblement égaux.


## Patentansprüche

1. Vorrichtung zum Spritzgießen von Behältern aus Kunststoff, deren Länge (AD) deutlich größer ist als deren Breite, die an einer ihrer großen Flächen offen sind und deren Öffnung von einem Rand umgeben ist, der sich in einer zum Boden des Behälters parallelen Ebene befindet, welche Vorrichtung von der Art ist, bei der der Formenhohlraum von einer Matrize (11) und einem Stempel (10), der eine Anzahl thermisch geregelter Schächte (13) aufweist, gebildet wird, dadurch gekennzeichnet,
- daß die einzelnen geregelten Schächte (13) auf die Lange (AD) hintereinander in mindestens drei elementaren Gruppen (14, 15, 16) verteilt sind, von denen die an den Enden angeordneten Gruppen (14, 15) gekühlt werden, während die in der Mitte angeordnete(n) Gruppe(n) (16) beheizt ist (sind);
- daß die Seitenflächen (41) des den Rand (53) bildenden Hohlraum-Abschnittes (Matrize 11 - Stempel 10) sich fortschreitend leicht voneinander entfernen (AB und CD), ausgehend von den Enden (A,D) und auf einem Teil der Länge L des Hohlraumes, und die zunehmend voneinander entfernten Abschnitte (AB und CD) dann miteinander durch einen mittleren geradlinigen Umfangsabschnitt (BC) verbunden sind und daß die Grundfläche (45) des den Rand (53) definierenden Hohlraumes an jedem Ende (E, H) leicht angehoben ist und dann langsam absinkt (EF, GH), um in einen mittleren, geradlinigen Umfangsabschnitt (FG) überzugehen, der sich in der gewünschten Nominalhöhe befindet.

2. Vorrichtung nach Anspruch 1, dadurch gekennzeichnet, daß das Organ zur thermischen Regelung für jede Gruppe einzelner Schächte (13)
- eine Quelle (20, 21, 33) eines thermischen Mediums (24)
- eine Pumpe (28) zum Umwälzen des Mediums (24) in dem der betreffenden Gruppe von Schächten (13) zugeordneten Kreislauf,
- einen in der Rücklaufleitung (26) von den Schächten (13) zur Mediumquelle (21) angeordneten Durchflußmengenregler (27) und
- ein im Vorlaufkreis (30) angeordnetes Manometer (29) umfaßt.

3. Vorrichtung nach Anspruch 1, dadurch gekennzeichnet,
- daß die von dem mittleren, von der Seitenfläche (40) des Hohlraumes entfernten mittleren Abschnitt (BC) gebildete Überhöhung (1) 0,6 bis 1,2 mm beträgt und
- daß die seitlichen Flächen (41) des Hohlraumes, die sich in Längsrichtung (AB, CD) erstrecken, sich auf einem Abschnitt voneinander entfernen, der, von jeder Seite her, sich über ein Viertel bis ein Drittel der Länge L des Hohlraumes erstreckt.

4. Vorrichtung nach Anspruch 1, dadurch gekennzeichnet, daß die Grundfläche (45) des Hohlraumes der Form an der Öffnungsseite an jedem Ende (E, H) um 0,4 bis 0,7 mm angehoben ist und dann langsam auf etwa einem Viertel oder einem Drittel der Länge L der Grundfläche abnimmt, um sich dann an einen mittleren geradlinigen Umfangsabschnitt (F, G) anzuschließen.

5. Vorrichtung nach einem der Ansprüche 1 bis 4, dadurch gekennzeichnet, daß die Trennebene (50) zwischen Stempel (10) und Matrize (11) sich in Höhe der Mitte des Hohlraum-Abschnittes befindet, der dazu bestimmt ist, den Rand (53) des Gußstückes zu bilden.

6. Vorrichtung nach Anspruch 1, dadurch gekennzeichnet, daß die einzelnen Schächte (13) auf drei im wesentlichen gleiche Gruppen (14, 15, 16) verteilt sind.

## Claims

1/ Process for the injection-moulding of plastics pieces, which the length is clearly greater than the width, and which is opened on one of its large sides, the opening being encircled with a belt within a plane parallel to the bottom of said piece, process of the type in which the impression is constituted by a die (11) and by a punch (10) comprising a plurality of thermally regulated shafts (13), process wherein:
- the indivudual regulated shafts (13) are distributed in series along the length (AD) in at least three elementary groups (14, 15, 16), the groups (14, 15) pleced et each of the ends being cooled, whilst the group(s) (16) placed at the center are heated;
- the lateral faces (41) of the impression of the belt (53) (die 11 and punch 10) move apart progressively (AB and CD) and slightly from each end (A,D), and this , over part of the length L of the impression, the spaced apart parts (AB and CD) being connected together by a rectilinear median central portion (BC);
- the base (46) of the impression of the belt (53), on the opening side, is slightly raised at each end (E,H), then progressively decreases (EF, GH) and joins the rectilinear median central portion (FG) disposed at the position desired.

2/ The process of claim 1, wherein the membre for regulating the heat of each group of individual shafts (13) comprises:
- a source (20, 21, 33) of thermic fluid (24),
- a pump (28) for circulating the fluid (24) in the circuit (26, 30) of each group of shafts (13) in question,
- a flow regulator (27) placed in the return circuit (26) from the shaft (13) to the source of fluid (21),
- a pressure gauge (29) placed in the outgoing circuit (30).

3/ The process of claim 1, wherein:
- the deflection (1) formed by the spaced apart portion (BC) (40, 41) of the lateral face of the impression is included between 0.6 and 1.2 mm;
- the lateral faces (41) of the impression disposed lengthwise (AB,CD) are spaced apart over a portion included, on either side, between one quarter and one third of the length L of the impression.

4/ The process of claim 1, wherein the base (45) of the impression, on the opening side, is raised by 0.4 to 0.7 mm at each end (E,H), then progressively decreases over about one quarter or one third of the length L of the base , and finally joins a rectilinear median central portion (F,G).

5/ The process of one of the claims 1 to 4, wherein the plane of loin (50) between the punch (10) and the die (11) is located at the center of the heigth of the part adapted to form the flange (51) of the belt (53) of the moulded object

6/ The process of claim 1, wherein the individual shafts (13) are distributed in three substantially equal groups (14, 15, 16).

*Fig. 1*

*Fig. 3*

Fig. 2

Fig. 5

Fig. 4

Fig. 6

Fig. 7

50

51

41 1 40

A L/3 B L/3 C L/3 D

L

11

6

0 122 207